# EUROPEAN PATENT APPLICATION

(11) **EP 4 578 344 A1**
(43) Date of publication of application: **02.07.2025**
(21) Application number: 23868339.5
(22) Date of filing: 11.07.2023
(51) Int. Cl.: A47J 27/10, A47J 27/00, A47L 15/00, A47L 15/14, A47L 15/42, A47L 15/50

(54) **FOOD COOKING DEVICE AND HOME APPLIANCE USING SAME**

(30) Priority: 19.09.2022 KR 20220117753
(71) Applicant: LG Electronics Inc., Yeongdeungpo-gu Seoul 07336 (KR)
(72) Inventor: YOON, Heesang, Seoul 08592 (KR); KIM, Seokhyun, Seoul 08592 (KR)
(74) Representative: Vossius & Partner Patentanwälte Rechtsanwälte mbB
(86) International application number: PCT/KR2023/009851
(87) International publication number: WO 2024/063279

(57) **Abstract**

The present invention relates to a food cooking device and a home appliance including same. The present invention may include a body (10) having an internal space (12') formed therein and a cover (30) covering the internal space (12'), wherein the body (10) includes a water discharge hole (20) formed thereon, through which hot water in the internal space (12') is discharged, and the cover (30) includes a water introduction hole (38) formed thereon, through which hot water is introduced into the internal space (12'). A flow sectional area of the water introduction hole (38) is formed to be bigger than that of the water discharge hole (20). Accordingly, if an amount of hot water introduced into the internal space (12') through the water introduction hole (38) is equal to or greater than a predetermined amount, the internal space (12') may always be filled with hot water. The food cooking device may be installed and used in, for example, a dishwasher or a washing machine. By continuously supplying hot water from the dishwasher or the washing machine, a cooking object (M) may remain submerged in hot water and thus a certain amount of heat may be supplied to the cooking object (M) for a predetermined period of time.

## Description

### Technical Field

The present invention relates to a food cooking device and a home appliance including the same.

### Background Art

When cooking food, direct heating methods such as grilling, boiling, or frying make it relatively difficult to apply heat accurately and evenly to a cooking object. Therefore, there is a problem that a lot of heat is applied to the cooking object during a cooking process, causing it to burn or be overcooked. In addition, when heat is directly applied to the cooking object, there is a disadvantage in that it is difficult to maintain the heating temperature evenly and consistently throughout the cooking object.

Taking this into account, in the so-called sous vide cooking method, heat is applied evenly to the entire cooking object at a relatively low temperature for a relatively long time. Accordingly, a relatively accurate amount of heat may be applied evenly throughout the cooking object.

Cooking sous vide allows you to make the cooking object tender rather than tough, and because the nutrients and flavor of the ingredients are preserved, you can enjoy more moist and flavorful food. Sous vide cooking allows a cooking object to be tender without being tough, and nutrients and flavors of ingredients to be preserved, resulting in more moist and flavorful food.

However, since the sous vide method requires a cooking object to be immersed in hot water of a predetermined temperature for a long period of time and be maintained at a constant temperature, a dedicated device is required to cook by using the sous vide method.

The food cartridge disclosed in Korean Patent Application Publication No. 10-2020-0047526, which is prior document 1, provides a device for sous vide cooking. However, this food cartridge has the problem that it requires a dedicated device for sous vide cooking, and the configuration of the food cartridge itself is very complex. In particular, there is the problem that water supply and discharge structures are complex.

Prior document 2, International Publication No. WO 2017/00083664, discloses a sous vide cooking device. This sous vide cooking device may perform sous vide cooking directly, but has a complex overall configuration, making it difficult to use the sous vide cooking device, and in particular, making it difficult for ordinary people to use the sous vide cooking device easily.

Prior document 3, which is Korean Patent No. 10-1203844, provides a tray for washing fruit in a dishwasher. In prior literature 3, the dishwasher is used, but is not for sous vide cooking, but simply provides a separate tray for washing fruit.

### Invention

### Technical Problem

The present invention is intended to solve the above-mentioned conventional problems, and an objective of the present invention is to provide a simplified food cooking device for sous vide cooking.

An objective of the present invention is to supply heat from hot water to a cooking object at a constant level by using a simple device when performing sous vide cooking.

An objective of the present invention is to ensure that a constant amount of hot water is maintained within a cooking device at all times when performing sous vide cooking.

An objective of the present invention is to enable excessively supplied hot water to be recirculated and used.

An objective of the present invention is to enable sous vide cooking in a home appliance.

An objective of the present invention is to ensure that hot water is evenly supplied to a cooking object when performing sous vide cooking in a home appliance.

An objective of the present invention is to cause water falling through a spray nozzle of a home appliance to vibrate a cooking device.

### Technical Solution

In order to accomplish the above objectives, the present disclosure may provide a food cooking device including a body having an internal space formed therein and a cover covering the internal space.

In the present invention, hot water passing through the cover may remain in the internal space of the body for a predetermined period of time and then be discharged outside the internal space by gravity.

In the present invention, a total flow cross-sectional area of water introduction holes may be much larger than a total flow cross-sectional area of water discharge holes.

In the present invention, an overflow fence may be provided on the edge of the body so that a predetermined amount or more of hot water may always be prepared to be delivered to the internal space of the body.

In the present invention, a locking member may be provided on the body to secure the cover to the body.

In the present invention, the food cooking device for sous vide cooking may be located in a dishwasher or a washing machine to continuously receive hot water for sous vide cooking.

By placing the food cooking device in the dishwasher or the washing machine and continuously supplying hot water thereto, a cooking object may be maintained at a consistent temperature, allowing sous vide cooking to be performed in the dishwasher or the washing machine.

In the present invention, the internal space of the body may always be filled with a predetermined amount of hot water so that heat may be evenly transferred to the cooking object.

In the present invention, water may fall to the food cooking device through a spray nozzle and hit the cover. Accordingly, heat transfer may be facilitated by vibration generated by the falling water.

The present invention may include the body in which the internal space in which the cooking object is located is open in one direction, with the water discharge holes being formed on the body, and the cover that covers the internal space of the body to allow the cooking object to be located in the internal space and has water introduction holes through which more hot water passes than the amount of hot water discharged per unit time through the water discharge holes, wherein hot water introduced into the internal space through each of the water introduction holes may stay in the internal space to transfer heat to the cooking object, and be discharged from the internal space through each of the water discharge holes.

In the present invention, a seating end may be formed on an entrance edge of the internal space of the body, and a seating wing formed on an edge of the cover may be seated on the seating end.

In the present invention, the locking member may include locking members provided on opposite ends of the body, respectively, so that the cover is fixed to the body, and the locking members may simultaneously press opposite ends of the cover, respectively, so as to fix the cover to the body.

In the present invention, the locking member may include a locking member body of an arched cross section with a predetermined radius of curvature, a pressing end provided on one end portion of the locking member body to press the cover, and a locking member hook that is provided on a side of the locking member body opposite to the pressing end and is rotatable with respect to the body.

In the present invention, the overflow fence may be formed to protrude on the seating end formed on the entrance edge of the internal space of the body, and a predetermined amount of hot water flowing into the internal space may be held by the overflow fence.

In the present invention, the locking member that fixes the cover to the body may be installed on the overflow fence so as to be rotatable at a predetermined angle.

In the present invention, the cover may have recessed parts formed thereon, and the water introduction hole may include multiple water introduction holes formed on each of the recessed parts.

In the present invention, the cover may further have a handle formed in a center thereof.

In the present invention, a protruding bead may be formed on a base constituting the bottom of the body to support one side of the cooking object and provide a gap between the cooking object and the base at a position of the water discharge hole.

The food cooking device of the present invention may include the body having the internal space, in which the cooking object is located, open upward and the multiple water discharge holes formed on the bottom thereof, and the cover that covers the internal space of the body to allow the cooking object to be located in the internal space and has multiple water introduction holes formed therein, with the total fluid cross-sectional area of the water introduction holes being larger than the total fluid cross-sectional area of the water discharge holes.

A home appliance of the present invention may include a casing having a tub provided therein with the interior thereof being opened and closed by a door, a pump that is installed inside the casing and pressurizes and delivers water, the spray nozzle that is located inside the tub and sprays water supplied by the pump, and the food cooking device that is installed in the casing and allows water sprayed by the spray nozzle to pass therethrough by gravity so that heat is transferred to the cooking object.

In the present invention, the food cooking device may include the body having the internal space in which the cooking object is located and the water discharge holes formed on the bottom thereof, and the cover that opens and closes the internal space and allows the cooking object to be located in the internal space, with the cover having the water introduction holes through which more hot water passes than the amount of hot water discharged per unit time through the water discharge holes.

The overflow fence may be formed to surround the entrance edge of the internal space of the body to form a space in which hot water entering the internal space through the water introduction holes is held.

The overflow fence may be formed to protrude on the edge of the seating end, which is formed on the entrance edge of the internal space of the body, by having a predetermined height.

The locking member that fixes the cover to the body may be installed on the overflow fence so as to be rotatable at a predetermined angle.

The cover may have the recessed parts formed thereon and may further have the handle formed on the center of the cover corresponding to a position between the recessed parts.

In the present invention, the locking member may include the locking member body of an arched cross section with a predetermined radius of curvature, the pressing end provided on the one end portion of the locking member body to press the cover, and the locking member hook that is provided on the side of the locking member body opposite to the pressing end and is rotatable with respect to the body.

### Advantageous Effects

The food cooking device and the home appliance including the same according to the present invention may have at least one of the following effects.

The food cooking device of the present invention may include the body through which water is capable of passing in the direction of gravity and the cover through which water is capable of passing in the direction of gravity, with the cover covering the internal space of the body. Accordingly, in the present invention, with the cooking object located in the internal space of the body being covered with the cover, heat may be transferred to the cooking object as hot water moves in the direction of gravity, thereby enabling sous vide cooking to be performed. Accordingly, the food cooking device of the present invention may perform sous vide cooking with a very simplified configuration.

In the present invention, the total flow cross-sectional area of the water introduction holes formed in the cover is much larger than the total flow cross-sectional area of the water discharge holes formed in the body. Accordingly, hot water delivered to the internal space of the body may maintain a constant temperature while remaining in the internal space for a relatively long time, and thus heat may be constantly supplied to the cooking object, thereby enabling sous vide cooking.

In the present invention, while the water discharge holes and the water introduction holes are different in flow cross-sectional area, the overflow fence is installed in the body so that hot water supplied above a predetermined level is discharged beyond the overflow fence to the outside. Accordingly, a predetermined amount of hot water may always be retained in the internal space of the body, and hot water that overflows the overflow fence may be recycled and used.

In the present invention, the protruding bead may be provided on the base of the body, and water discharge holes may be adjacent to the protruding bead. Accordingly, water in the internal space of the body may be discharged as designed through the water discharge holes formed on the base.

In the present invention, the cover may be pressed and fixed to the seating end of the body by the locking member. Accordingly, the cover may be locked and fixed to the body, and be easily separated therefrom with a simple configuration.

In the present invention, the handle protrudes from the central portion of the cover. Accordingly, it is easy to handle the cover.

In the present invention, while the food cooking device is placed inside the dishwasher or washing machine, sous vide cooking may be performed by utilizing a hot water supply system inside the dishwasher or washing machine. That is, sous vide cooking may be performed by utilizing the existing hot water control system of the home appliance without using a separate sous vide cooking device.

In the present invention, while the food cooking device is located inside the home appliance, hot water may be sprayed through the spray nozzle to the food cooking device located under the spray nozzle. The hot water sprayed in this manner may be evenly supplied to the cooking object in the internal space through multiple water introduction holes formed on the cover of the food cooking device.

In the present invention, hot water sprayed from the spray nozzle may fall and hit the cover of the food cooking device, causing vibration. Such vibration may promote heat transfer, thereby allowing heat to be transferred more quickly from the hot water to the cooking object.

.

### Description of Drawings

FIG. 1 is a perspective view showing the configuration of a food cooking device according to a preferred embodiment of the present invention.
FIG. 2 is an exploded perspective view showing the embodiment illustrated in FIG. 1.
FIG. 3 is a cross-sectional view taken along line 3-3 of FIG. 1.
FIG. 4 is a cross-sectional perspective view showing the cross-sectional configuration of the food cooking device according to the embodiment illustrated in FIG. 1.
FIG. 5 is a plan view showing a body constituting the food cooking device according to an embodiment of the present invention.
FIG. 6 is a plan view showing a cover constituting the food cooking device according to an embodiment of the present invention.
FIG. 7 is an operational state view showing the use of a locking member in an embodiment of the present invention.
FIG. 8 is a perspective view showing an example of a dishwasher which is a home appliance in which the food cooking device can be employed in an embodiment of the present invention.
FIG. 9 is a perspective view showing a state in which the food cooking device is mounted to the dishwasher of FIG. 8.
FIG. 10 is a front cross-sectional view showing a state in which the food cooking device is mounted to the dishwasher of FIG. 8.
FIG. 11 is an exploded perspective view showing the food cooking device being positioned on a shelf of the dishwasher in an embodiment of the present invention.
FIG. 12 is a view illustrating the prevention of interference between the food cooking device and an installation guide of the shelf of an embodiment of the present invention.
FIG. 13 is a view illustrating that a cooking object is located in the food cooking device of an embodiment of the present invention.
FIG. 14 is an operational state diagram showing that the food cooking device of an embodiment of the present invention is installed in the dishwasher and performs the process of cooking.
FIG. 15 is a view illustrating vibrations generated when hot water falls on the food cooking device of an embodiment of the present invention.
FIG. 16 is a view illustrating that cooking is in progress while hot water is supplied to the food cooking device of an embodiment of the present invention.

### Best Mode

Hereinafter, some embodiments of the present invention are described in detail with exemplary drawings. When adding reference numerals to components in each drawing, it should be noted that identical components are given the same reference numerals as much as possible even if they are shown in different drawings. In addition, when explaining the embodiments of the present invention, if a detailed description of the related known configuration or function is determined to hinder understanding of the embodiments of the present invention, detailed description thereof is omitted.

Hereinafter, some embodiments of the present disclosure are described in detail with exemplary drawings. When adding reference numerals to components in each drawing, it should be noted that identical components are given the same reference numerals as much as possible even if they are shown in different drawings. In addition, when explaining the embodiments of the present disclosure, if a detailed description of the related known configuration or function is determined to hinder understanding of the embodiments of the present disclosure, detailed description thereof is omitted.

The configurations of a food cooking device and a home appliance including the same according to an embodiment of the present invention will be described in detail with reference to the drawings.

The food cooking device of the embodiment of the present invention is used for sous vide cooking, which is fluid immersion cooking in which a cooling object, food, is sealed and immersed in water at a predetermined temperature to cook the food. The food cooking device of the present embodiment is configured so that a sealed food, i.e. a cooking object M, may be kept at a predetermined temperature for a predetermined period of time or more while being immersed in water.

The cooking device of the present invention may include a body 10 having a predetermined internal space 12' formed therein and a cover 30 that covers the internal space 12' of the body. The cooking object M may be positioned within the internal space 12' formed by the body 10 and the cover 30, and a predetermined amount or more of hot water having a predetermined temperature may be continuously present in the internal space 12' for a predetermined period of time.

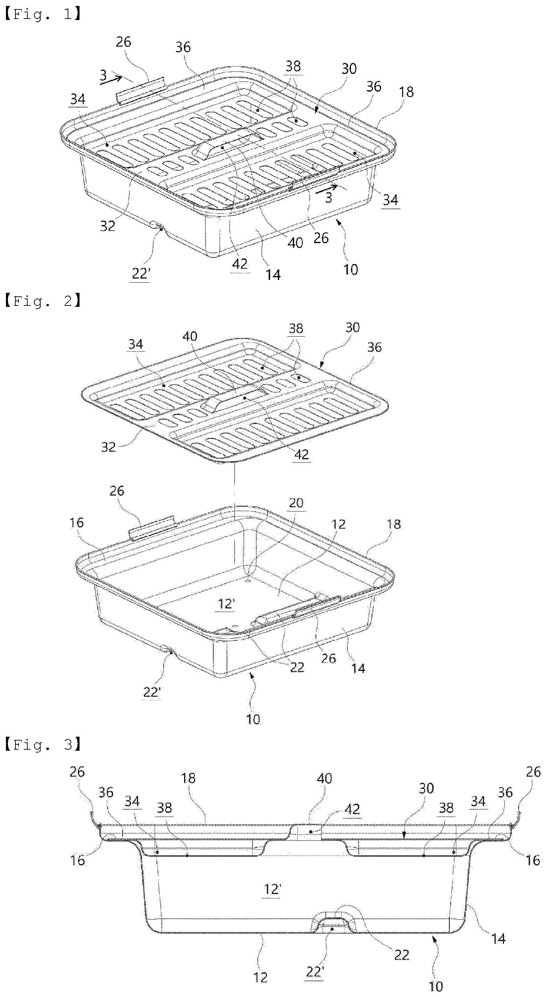

The body 10 may be made in such a manner that side walls 14 are integrally formed along the edges of a base 12 in the shape of a flat plate to have predetermined heights. The base 12 and the side walls 14 may form the internal space 12'. The internal space 12' may be open toward the upside of the body 10. In the illustrated embodiment, the base 12 is quadrangular. However, the base 12 may be circular. Each of the side walls 14 may be formed to be round at a portion thereof connected to the base 12. The imaginary extension line of each of the side walls 14 may be orthogonal or obtuse with respect to the base 12. In the illustrated embodiment, the imaginary extension line of the base 12 and the imaginary extension line of the side wall 14 meet at an obtuse angle on the basis of FIG. 3.

In this embodiment, the body 10 has the internal space 12' in the shape of a flat hexahedron. However, the body 10 may have the internal space 12' of various shapes. For example, the internal space 12' may be made in a flat cylindrical shape. A material of which the body 10 is formed has a predetermined thickness, so that the shape of the internal space 12' and the appearance of the body 10 may be almost the same. The body 10 may be made of a metal plate. The body 10 may alternatively be made of a synthetic resin material.

The body 10 may be made to correspond to the shape of space in which the cooking device of the present invention is placed and performs cooking. By considering that the cooking device of the present invention is located on a shelf 66 of a dishwasher 50, the cooking device has a shape that allows the cooking device to be seated on the shelf 66 as illustrated in the drawing.

At the ends of the side walls 14 there may be seating ends 16. Each of the seating ends 16 may extend from an upper portion of the side wall 14 to the outside of the body 10. The seating end 16 forms a plane that protrudes by a predetermined width. The seating end 16 may be formed to protrude outward by surrounding the entrance edge of the internal space 12'.

There may be an overflow fence 18 protruding from the edge of the seating end 16. The overflow fence 18 may serve to keep the internal space 12' of the body 10 filled with hot water. That is, the overflow fence 18 may serve to form a space for collecting hot water to be supplied to the internal space 12'. When the amount of hot water supplied to the internal space 12' of the body 10 continues to be greater than the amount of hot water drained downward from the internal space 12' of the body 10, the hot water may overflow the overflow fence 18 and be discharged outside the body 10.

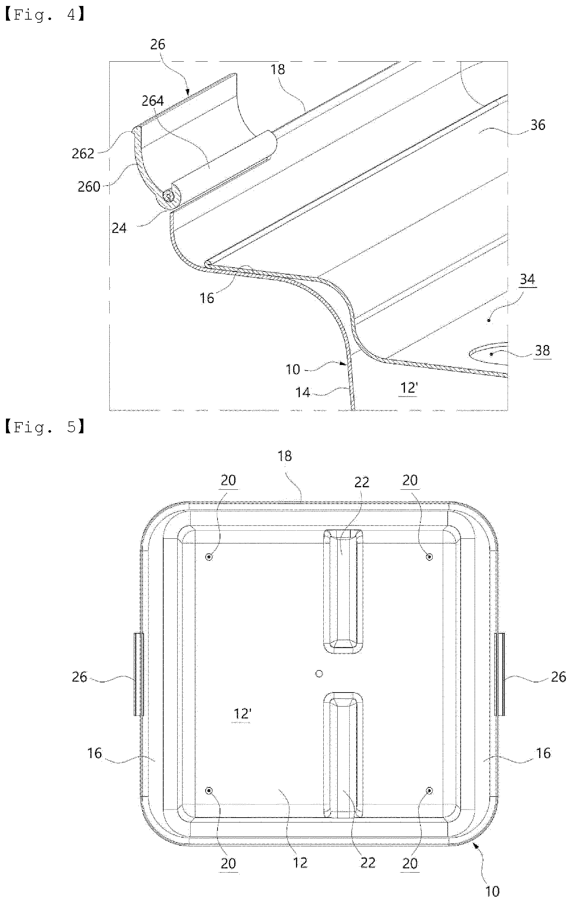

Water discharge holes 20 may be formed in the base 12 so as to discharge hot water from the internal space 12' of the body 10 to the lower side of the body 10. Each of the water discharge holes 20 is preferably formed on the base 12. However, the water discharge holes 20 may be formed on the side walls 14. When the water discharge hole 20 is formed on the side wall 14, it is preferable that the water discharge hole 20 be formed on the side wall 14 to be adjacent to the base 12. This is to ensure that hot water of a relatively low temperature does not remain in the internal space 12' and is drained smoothly. In the embodiment illustrated in the drawing, the water discharge hole 20 is formed on the base 12 to be adjacent to the side wall 14 as can be seen in FIG. 5.

Protruding beads 22 may be formed in the base 12. Each of the protruding beads 22 is formed by protruding from the surface of the base 12. There may be the water discharge hole 20 near the protruding bead 22. The protruding bead 22 forms a predetermined gap between the cooking object and the surface of the base 12 so as not to impede the drainage of water through the water discharge hole 20. The total flow cross-sectional area of the water discharge holes 20 is formed to be smaller than the total flow cross-sectional area of water introduction holes 38, which will be described below.

The protruding bead 22 may prevent the cooking object M from being completely in close contact with the base 12. The protruding bead 22 may form a gap between the base 12 and the cooking object M, so that heat may be transferred from hot water in the gap to the cooking object M.

The protruding bead 22 is formed in only two places in the illustrated embodiment. However, the protruding bead 22 may be various in shape and number. The protruding bead 22A may have multiple protruding beads 22 formed at predetermined intervals in the entire area of the base 12. The protruding bead 22 may be formed in a hemispherical shape so that a contact area between the protruding bead 22 and the cooking object M is relatively small. In this case, the water discharge hole 20 may be formed at a portion of the base 12 at which the protruding bead 22 is not formed.

An avoidance groove 22' may be formed on the lower surface of the base 12 corresponding to the protruding bead 22. For example, in a case in which the body 10 is made of a metal plate, when the surface of the base 12 is made to protrude to form the protruding bead 22, the avoidance groove 22' may be formed on the lower surface of the base 12. The position of the avoidance groove 22' may be set according to the configuration of the shelf 66, which will be described below. By having the avoidance groove 22', interference between an installation guide 67 on the shelf 66 and the body 10 may be avoided.

Meanwhile, there may be another embodiment of a component formed on the base 12 of the body 10. In the another embodiment, the protruding direction of the protruding bead 22 formed on the base 12 may be reversed from the current direction. For example, the protruding bead 22 may protrude from the lower surface of the base 12. Accordingly, on the upper surface of the base 12, a portion corresponding to the protruding bead 22 may be formed to be concave. In this case, the water discharge hole 20 may be formed on the protruding bead 22. Here, the protruding bead 22 and the water discharge hole 20 of the another embodiment may have protruding directions thereof and formation locations thereof determined for the same function as in the embodiment described above.

A locking member hooking slot 24 may be formed on one side of the overflow fence 18 or the seating end 16. The locking member hooking slot 24 may be formed in the overflow fence 18 to have a predetermined width and predetermined length. The locking member hooking slot 24 is clearly illustrated in FIG. 4.

A locking member 26 may be installed in the locking member hooking slot 24 so as to be rotatable at a predetermined angle. The configuration of the locking member 26 is clearly illustrated in FIG. 4. The appearance and frame of the locking member 26 are constituted by a locking member body 260. The locking member body 260 may be an arch-shaped plate having a predetermined radius of curvature. A pressing end 262 may be formed on one end of the locking member body 260. The pressing end 262 may press and fix one side of the cover 30, which will be described below. On the opposite side of the pressing end 262, there may be a locking member hook 264 having a cylindrical shape with one end open. The locking member hook 264 may be installed through the locking member hooking slot 24 so that the locking member 26 may rotate by a predetermined angle with respect to the overflow fence 18 of the body 10 to perform a function thereof.

The locking member 26 may have locking members provided on opposite sides of the body 10, respectively, and the locking members may serve to press and fix the opposite sides of the cover 30, which will be described below, onto the seating end 16 of the body 10. The cover 30 may be fixed to the body 10 by these locking members 26 simultaneously pressing the opposite sides of the cover 30.

The cover 30 covers the internal space 12' of the body 10. The cooking object M in the internal space 12' is prevented from coming out of the body 10 by the cover 30. The cover 30 may have a shape corresponding to the entrance of the internal space 12'. In this embodiment, when viewed in a plan view, the cover 30 may have a quadrangular shape.

The appearance and frame of the cover 30 may be constituted by a cover body 32. In this embodiment, the cover body 32 has a shape of an approximately quadrangular plate. Recessed parts 34 may be formed in the cover body 32. Each of the recessed parts 34 may be concavely recessed on the surface of the cover body 32 and may convexly protrude from the lower surface of the cover body 32. The cooking object M in the internal space 12' may be fixed by the recessed part 34 protruding from the lower surface of the cover body 32. The cooking object M may be pressed by the cover 30 only when the thickness of the cooking object M is sufficient. Otherwise, the cover 30 may serve to prevent the cooking object M from floating due to buoyancy in the hot water and going outside the body 10.

There may be a seating wing 36 surrounding the edge of the cover body 32. The seating wing 36 is a part placed on each of the seating ends 16 of the body 10. The seating wing 36 does not interfere with the overflow fence 18. That is, the end portion of the seating wing 36 may be adjacent to the inner surface of the overflow fence 18. This configuration can be seen in FIG. 4.

The cover body 32 may have the multiple water introduction holes 38 formed thereon. The water introduction holes 38 may be formed in most areas of the cover body 32. The total fluid cross-sectional area of the water introduction holes 38 is much wider than that of the water discharge holes 20 of the body 10. This is to ensure that hot water enters the internal space 12' through the water introduction holes 38 and is not discharged directly from the internal space 12' of the body 10, but remains in the internal space 12' for a predetermined period of time. That is, the amount of hot water flowing into the internal space 12' through the water introduction holes 38 is much greater than the amount of hot water that is discharged per unit time through the water discharge holes 20, and thus a predetermined amount or more of hot water is always present in the internal space 12' so that the cooking object M may be immersed in the hot water.

The water introduction holes 38 may be formed even on the recessed part 34 of the cover body 32, etc. The water introduction holes 38 are not formed on the seating wing 36. The seating wing 36 is seated on the seating end 16 of the body 10, and thus even if the water introduction holes 38 are present in the seating wing 36, the water introduction holes 38 cannot communicate with the internal space 12'. When the protruding width of the seating wing 36 is increased so that a portion of the seating wing 36 faces the internal space 12', the water introduction holes 38 may be formed in the portion.

The cover body 32 may have a handle 40. The handle 40 may be located on the center of the cover body 32. The handle 40 may be formed to protrude from the cover body 32. The handle 40 may be made by protruding outward from the cover body 32 while one side of the cover body 32 is cut. Accordingly, by forming the handle 40, a handle through-hole 42 may be formed in the cover body 32. The handle through-hole 42 may serve as a kind of water introduction hole 38. A user may insert a finger into the handle through-hole 42 to hold the handle 40 and handle the cover 30.

The cooking device having this configuration is not only used in a device dedicated to sous vide cooking, but may be used to upgrade the control program of an existing home appliance to perform sous vide cooking. For example, the cooking device of this embodiment may be placed in a home appliance that uses hot water so as to perform sous vide cooking. Examples of this home appliance include a washing machine and the dishwasher 50.

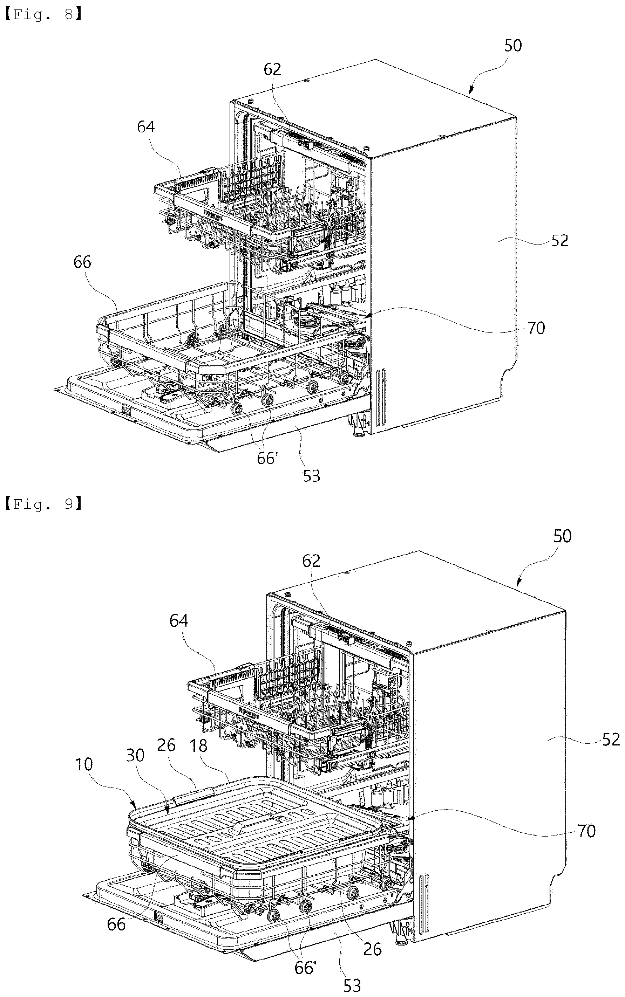

For example, when performing sous vide cooking by using the dishwasher 50, the cooking device of the embodiment of the present invention may be used. FIGS. 8 to 10 illustrate an example of a configuration of the dishwasher 50 in which the cooking device of the embodiment of the present invention may be positioned and used, wherein the cooking device is seen to be mounted to the dishwasher 50.

The exterior of the dishwasher 50 may be formed by a casing 52. The casing 52 may have a hexahedral shape and may have an internal space formed therein to be opened at a front surface thereof. The internal space may be opened and closed by a door 53. The door 53 may be opened and closed around a hinge (not shown) connected to the lower front side of the casing 52. That is, the door 53 may be rotated toward the front floor of the casing 52 to open the space of the casing 52. Conversely, the door 53 may be rotated on the front floor of the casing 52 to close the opened front surface of the casing 52, thereby closing the space formed inside the casing 52.

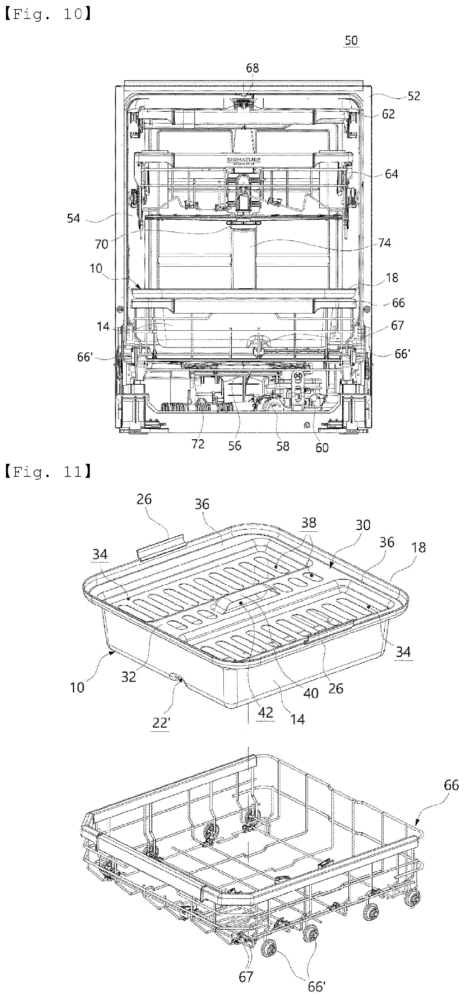

The space within the casing 52 may include a tub 54 (see FIG. 10). The tub 54 is a part in which water is supplied and washing is performed. The tub 54 is open forward so that an interior thereof may be exposed when the door 53 is opened. The shelves 62, 64, and 66 to be described below may be installed in the tub 54. The shelves 62, 64, and 66 are parts on which dishes to be washed are placed when used in the dishwasher 50. The cooking device of this embodiment may be seated on the third shelf 66 among the shelves 62, 64, and 66.

A sump 56 may be installed on the lower portion of the tub 54. The sump 56 may have a concave shape to collect water therein so that the sump 56 may collect water. Additionally, the sump 56 may be configured to filter out foreign substances from the collected water and recirculate the water.

There may be a pump 58 under the sump 56. The pump 58 is used to pressurize and deliver water. The pump 58 may pressurize water supplied from outside and water recycled through the sump 56 and deliver the water to spray nozzles 68, 70, and 72 to be described below.

A heater 60 may be provided to heat water supplied to or discharged from the pump 58. The location of the heater 60 may vary depending on design conditions. For example, water may be heated by the heater 60 before being pumped by the pump 58. Water coming out of pump 58 may be delivered in different paths by operating valves (not shown).

Meanwhile, a first shelf 62, a second shelf 64, and a third shelf 66 may be installed in sequence with different heights within the tub 54. The number of shelves 62, 64, and 66 may vary depending on the size of the dishwasher 50. For example, only the second shelf 64 and the third shelf 66 may be employed. The first shelf 62 and the second shelf 64 may be inserted and removed in a drawerlike manner along guide rails (without a reference numeral) installed on the opposite walls of the tub 54. The third shelf 66, which is the largest, may have multiple rollers 66'. The third shelf 66 may be moved in and out along the inner surface of the door 53 when the door 53 is opened by the rollers 66'. The shelves 62, 64, and 66 are mainly made by combining wires of a predetermined thickness to allow water to pass therethrough smoothly and perform washing.

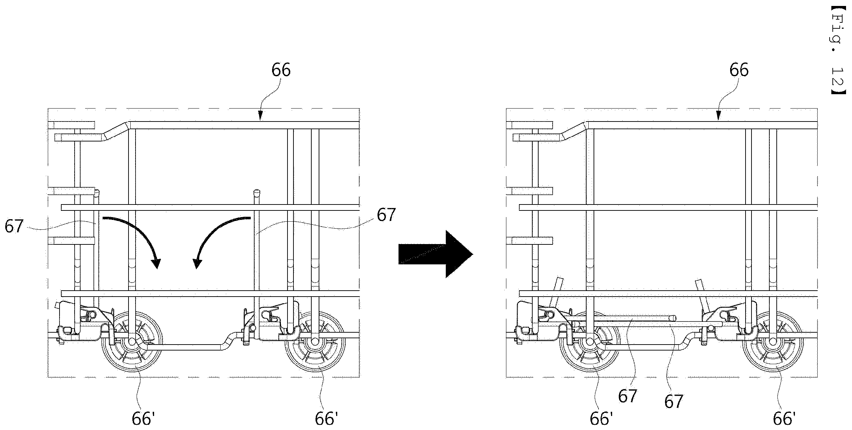

The third shelf 66 may have the installation guide 67 positioned so that the installation guide 67 is laid down or erected (see FIG. 12). When required, the installation guide 67 may be used to stand upright and support vessels, etc. When the installation guide 67 is laid down, the installation guide 67 may be located at a position corresponding to the avoidance groove 22' of the body 10. When designing the body 10, the body 10 may have a size such that the body 10 may be positioned within the third shelf 66. Typically, the third shelf 66 may be the largest shelf and may be arranged at the lowest portion.

A first spray nozzle 68, a second spray nozzle 70, and a third spray nozzle 72 may be provided within the tub 54. The number of these spray nozzles 68, 70, and 72 may vary depending on the number of the shelves 62, 64, and 66. These spray nozzles 68, 70, and 72 may have various shapes depending on positions at which they are installed. For example, the first spray nozzle 68, which is located at the uppermost part of the tub 54, may have the shape of a pipe that is capable of discharging water downward. The second spray nozzle 70 and the third spray nozzle 72 may be in the shape of a straight rod or cross and may discharge water through multiple holes while rotating. These spray nozzles 68, 70, and 72 may have any shapes as long as they are capable of spraying water.

Meanwhile, water may be supplied to the spray nozzles 68, 70, and 72 through a flow pipe 74. The flow pipe 74 may extend, for example, along one side of the tub 54. The spray nozzles 68, 70, and 72 may be connected to the flow pipe 74 to receive and discharge water. Water may be pumped and delivered to the flow pipe 74 by the pump 58. Additionally, water may be selectively delivered to each of the spray nozzles 68, 70, and 72 through the valves. For example, water may be delivered only to the second spray nozzle 70, or water may be delivered to the first spray nozzle 68 and the second spray nozzle 70. In addition to this, water may be delivered in various combinations or only to one of the spray nozzles 68, 70, and 72.

Among the spray nozzles 68, 70, and 72, the first spray nozzle 68 may be located at the uppermost part top of the tub 54 and may discharge water downward. The second spray nozzle 70 may be positioned under the second shelf 64 or above the third shelf 66. The third spray nozzle 72 may be positioned under the third shelf 66. Hot water sprayed from the second spray nozzle 70 may mainly be supplied into the body 10 of the cooking device located on the third shelf 66.

Meanwhile, when the food cooking device according to the present invention is used in the washing machine, the shelves 62, 64, and 66 are not present, so the food cooking device may be installed inside the washing machine. In addition, when the food cooking device of the present invention is used in the washing machine, the operation of a washing tub for washing may not occur, but the process of supplying and discharging water having a temperature appropriate for sous vide cooking may occur.

Hereinafter, the operations of the food cooking device having the configuration as described above according to the present invention and the home appliance including the same will be described in detail.

The cooking object M is positioned in the internal space 12' of the body 10. In this case, the cooking object M may be vacuumpacked to prevent contact with air. By packaging the cooking object M in this way, the cooking object M is prevented from coming into direct contact with hot water and causing problems such as the loss of meat juice, and the original flavor of the cooking object M is prevented from being damaged by the hot water.

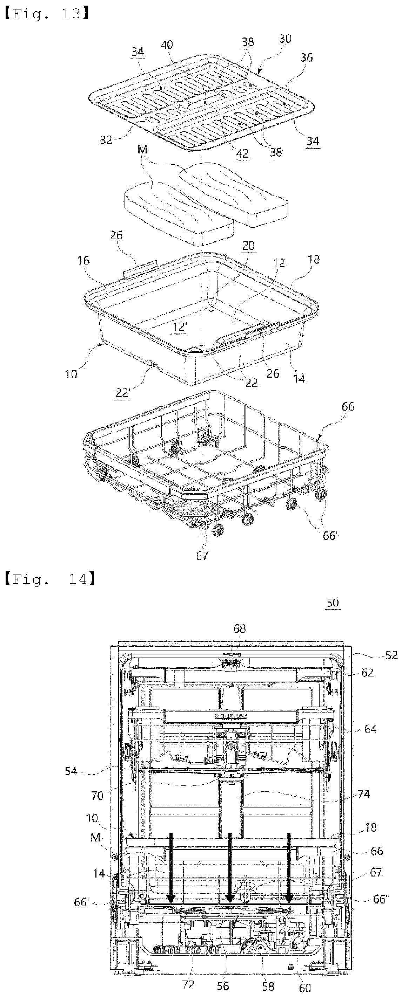

As can be seen in FIG. 13, with the cover 30 separated from the body 10, the cooking object M is placed into the internal space 12' of the body 10. The position of the cooking object M placed in the internal space 12' may vary depending on its size, thickness, etc. However, it is necessary that the cooking object M does not block the water discharge holes 20 of the body 10. This is necessary to ensure that the amount of hot water passing through the cover 30 and the body 10 remains constant. When the water discharge holes 20 are blocked by the cooking object M, the discharge and supply of hot water may not occur as designed, so that the temperature of the hot water within the internal space 12' of the body 10 may not be maintained at a set value.

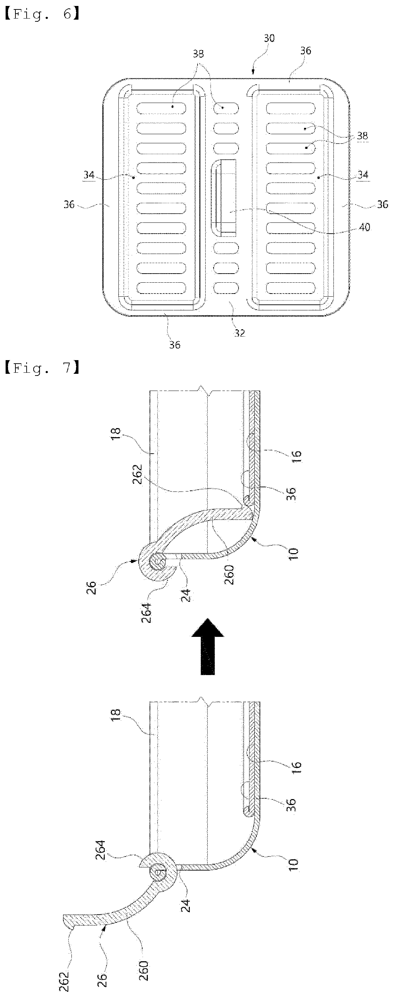

After the cooking object M is placed within the internal space 12', the cover 30 is closed. The seating wing 36 of the cover 30 is placed on the seating end 16 of the body 10. In this state, the locking member 26 is rotated so that the pressing end 262 of the locking member 26 presses the seating wing 36. Here, the operation of the locking member 26 is illustrated in FIG. 7. The left side of FIG. 7 illustrates a state in which the locking member 26 does not press the cover 30. In this state, the cover 30 may be positioned on the body 10. Next, by rotating the locking member 26, the pressing end 262 of the locking member 26 presses the seating wing 36 of the cover 30. The locking members 26 simultaneously press the seating wings 36 on the opposite sides of the cover 30 to prevent the cover 30 from moving relative to the body 10.

FIG. 9 illustrates the cooking device of the embodiment of the present invention seated on the third shelf 66 of the dishwasher 50 with the internal space 12' of the body 10 closed by the cover 30. To this end, the door 53 is opened, and the third shelf 66 is moved to the outside of the casing 52 along the inner surface of the door 53. The cooking device of the embodiment of the present invention may be seated on the third shelf 66 moved to the outside of the casing 52. This state may be seen in FIG. 9.

Next, the door 53 is required to be closed. To do this, all of the shelves 62, 64, and 66 are placed inside the tub 54 of the casing 52. In this case, the body 10, which constitutes the cooking device of the embodiment of the present invention, is seated on the third shelf 66. The installation guide 67, which is laid down as shown in the right drawing of FIG. 12, may be positioned in the avoidance groove 22' of the body 10. This means that the body 10 is installed on the third shelf 66 without tilting.

By aligning the body 10 horizontally and installing the body 10 on the third shelf 66, the flow of hot water may be achieved as designed through the cover 30 and the body 10. The cooking device of the embodiment of the present invention is placed inside the casing 52 while being seated on the third shelf 66, as illustrated in FIG. 10. As can be seen here, the body 10 is seated on the third shelf 66.

In this state, the movement of hot water through the water introduction holes 38 formed in the cover 30 may not be obstructed. In addition, the movement of hot water through the water discharge holes 20 formed in the body 10 may not be obstructed. This is because the cooking device of the embodiment of the present invention is placed on the third shelf 66, so both the water discharge holes 20 and the water introduction holes 38 are open.

In this way, when hot water freely enters the internal space 12' through the water introduction holes 38 and is discharged outside the internal space 12' through the water discharge holes 20, hot water supplied through the second spray nozzle 70, for example, may smoothly be introduced into and be discharged from the internal space 12' of the body 10. However, since the total flow cross-sectional area of the water introduction holes 38 is much larger than the total flow cross-sectional area of the water discharge holes 20, the amount of hot water entering the internal space 12' per unit time is relatively large, and the amount of hot water discharged to the outside from the internal space 12' is relatively small. Therefore, the internal space 12' may be filled with hot water.

An amount of hot water equal to the amount of hot water discharged from the internal space 12' through the water discharge holes 20 when the internal space 12' is full of hot water may enter the internal space 12' through the water introduction holes 38. To this end, hot water is required to be continuously supplied through the second spray nozzle 70 so that the required amount of hot water (the amount of hot water discharged through the water discharge holes 20) enters the internal space 12' through the water introduction holes 38.

In addition, the body 10 may have the overflow fence 18, so that a predetermined amount of hot water may be present in space formed by the cover 30 and the overflow fence 18. When the overflow fence 18 is not present, the cover 30 may contain an amount of hot water corresponding to the volume of the recessed part 34. Accordingly, the hot water here may enter the internal space 12' in place of hot water discharged through the water discharge holes 20. However, due to the presence of the overflow fence 18, the amount of hot water waiting to enter the internal space 12' increases relatively, so that the amount of hot water within the internal space 12' may be maintained more stably.

FIG. 14 shows arrows indicating that hot water supplied through, for example, the second spray nozzle 70 within the dishwasher 50 enters the internal space 12' of the body 10 through the cover 30 and is discharged by gravity from the internal space 12' through the water discharge holes 20 of the body 10.

In this way, when hot water passing through the internal space 12' of the body 10 is constant, heat is transferred from the hot water to the cooking object M, and the hot water with a lowered temperature is discharged to the outside through the water discharge holes 20, and this operation may be continuously performed. Accordingly, within the internal space 12' of the body 10, heat may be transferred consistently to the cooking object M, so sous vide cooking may proceed.

Meanwhile, hot water moving out from the internal space 12' of the body 10 in the direction of gravity may be collected in the sump 56, and may have a predetermined temperature while passing through the heater 60 with foreign substances filtered out. The hot water made to have a predetermined temperature in this way may be pumped by the pump 58 and supplied through the flow pipe 74 to, for example, the second spray nozzle 70. The hot water supplied to the second spray nozzle 70 may be delivered to the cooking device of the embodiment of the present invention.

That is, as described above, hot water sprayed from the second spray nozzle 70 may fall on the cover 30, be positioned in the space formed by the overflow fence 18 on the cover 30, and then may enter the internal space 12' through the water introduction holes 38. When the space formed by the overflow fence 18 is filled with hot water and receives an amount of hot water greater than the amount of hot water discharged through the water discharge holes 20, the hot water may overflow the overflow fence 18 and be discharged to the outside.

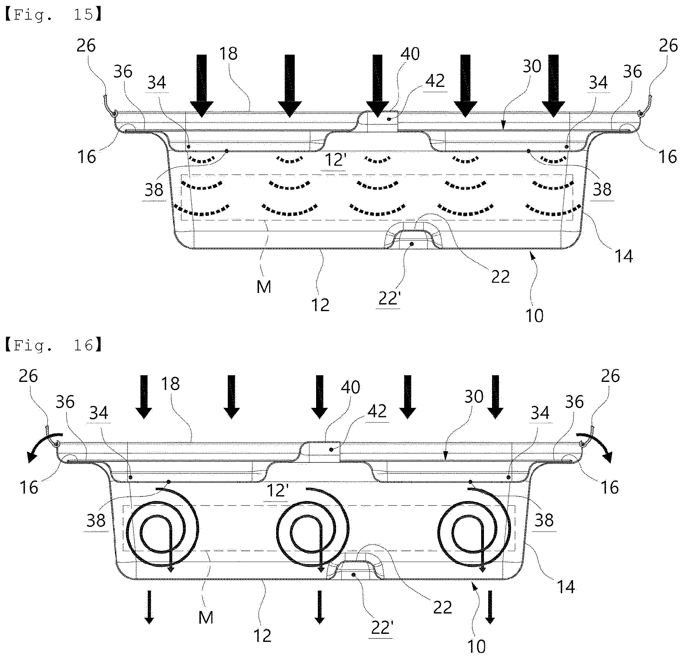

Hot water is supplied into the internal space 12' of the body 10 through the water introduction holes 38, heat is transferred to the cooking object M in the internal space 12', and the hot water is discharged to the outside through the water discharge holes 20 and overflows the overflow fence 18, as indicated by arrows in FIG. 16. The hot water discharged in this way may go through the recirculation process described above.

Meanwhile, hot water sprayed from the second spray nozzle 70 may fall on the cover 30. When the hot water falls like this and hits the cover 30, vibrations may occur. The vibrations generated by the falling hot water are indicated by a dotted line in FIG. 15. The vibrations generated by the falling hot water in this way may enable smoother heat transfer between the hot water and the cooking object M. This may be seen from the characteristic that the faster the propagation speed of sound waves, the more severe a pressure change trend near a vibrator, and the faster the propagation speed of sound waves, the higher the distribution of negative pressure generated within liquid. By calculating the negative pressure generated in this liquid by using a numerical solution method (FE-BEM), it may be seen that heat transfer is improved as vibrations occur. In summary, heat transfer may be improved by vibrations, and the vibrations generated by hot water falling on and hitting the cover 30 may produce various frequencies, thereby increasing heat transfer.

Meanwhile, in the early stage of sous vide cooking, hot water must be brought to a temperature required for the cooking, and the instantaneous heating capacity of the heater 60 must be utilized to the maximum extent to raise the temperature of the hot water to a desired value in a short period of time. By doing this, overall cooking time may be reduced.

In addition, when hot water reaches a predetermined temperature after the heater 60 operates, the heater 60 is turned off to be protected. Furthermore, when the heater 60 is reactivated, it starts operating at maximum power. The calculation of the maximum power is performed after shortening time to reach a target temperature and stabilizing a flow rate within a few seconds (e.g., 2 seconds) or more after hot water generation starts. The maximum power is adjusted to prevent exceeding the target temperature.

The maximum power of the heater 60 is adjusted by checking difference between the target temperature and the temperature of incoming water. PID control may be applied for temperature feedback control to reduce an error to zero in reaching the target temperature.

Meanwhile, in order to perform sous vide cooking in the dishwasher 50, an operational algorithm for the sous vide cooking must be present in a control part of the dishwasher 50. A newly released dishwasher 50 may have an operational algorithm pre-stored for performing sous-vide cooking. However, for a dishwasher 50 that has already been released and sold, a corresponding operational algorithm may be provided online, for example.

In this way, once the operational algorithm is provided to the dishwasher 50, a user may mount the cooking device on the dishwasher 50 as described above and perform sous-vide cooking. For example, by selecting ingredients and a desired ripening level through a ThinQ app, an appropriate temperature and operating time are determined, allowing sous vide cooking to proceed. When the sous vide cooking process is finished, water is drained and the cover 30 is removed from the body 10 to take out the cooking object M.

After the sous vide cooking is performed and water is drained, water having a predetermined temperature may be supplied to cool the cooking object M. In this way, temperatures within the cooking object M and the tub 54 may be lowered. When the cooking object M is cooled after heating in this manner, bacterial growth on the cooking object M may be suppressed.

In addition, to check the temperature inside the cooking object M, a Wi-Fi thermometer (probe) may be used. Additionally, control time may be controlled through this Wi-Fi thermometer.

In the above, even though all the components constituting the embodiments according to the present invention have been described as being combined or operating in combination as one, the present invention is not necessarily limited to these embodiments. That is, within the scope of the objective of the present invention, one or more of all of the components may be selectively combined to operate. In addition, the terms "include", "comprise", or "have", as used herein, unless otherwise specifically stated, imply that the relevant component may be present, and therefore should be construed to include other components rather than to exclude other components. All terms, including technical or scientific terms, unless otherwise defined, have the same meanings as commonly understood by those skilled in the art to which the present invention belongs. Commonly used terms, such as terms defined in a dictionary, should be interpreted as being consistent with their contextual meaning in the relevant technology and should not be interpreted in an idealized or overly formal sense unless expressly defined in the present invention.

## Claims

1. A food cooking device comprising:
a body in which an internal space in which a cooking object is located is open in one direction, with a water discharge hole being formed on the body, and
a cover that covers the internal space of the body to allow the cooking object to be located in the internal space and has a water introduction hole through which more hot water passes than an amount of hot water discharged per unit time through the water discharge hole,
wherein hot water introduced into the internal space through the water introduction hole stay in the internal space to transfer heat to the cooking object, and is discharged from the internal space through the water discharge hole.

2. The food cooking device of claim 1, wherein a seating end is formed on an entrance edge of the internal space of the body, and a seating wing formed on an edge of the cover is seated on the seating end.

3. The food cooking device of claim 2, wherein locking members are provided on opposite ends of the body, respectively, so that the cover is fixed to the body, and simultaneously press opposite ends of the cover, respectively, so as to fix the cover to the body.

4. The food cooking device of claim 3, wherein the locking member comprises a locking member body of an arched cross section with a predetermined radius of curvature, a pressing end provided on one end portion of the locking member body to press the cover, and a locking member hook that is provided on a side of the locking member body opposite to the pressing end and is rotatable with respect to the body.

5. The food cooking device of claim 1, wherein an overflow fence is formed to protrude on a seating end formed on an entrance edge of the internal space of the body, and a predetermined amount of hot water flowing into the internal space is held by the overflow fence.

6. The food cooking device of claim 5, wherein a locking member that fixes the cover to the body is installed on the overflow fence so as to be rotatable at a predetermined angle.

7. The food cooking device of claim 1, wherein the cover has recessed parts formed thereon, and the water introduction hole comprises multiple water introduction holes formed on each of the recessed parts.

8. The food cooking device of claim 7, wherein the cover further comprises a handle formed on a center thereof.

9. The food cooking device of claim 1, wherein a protruding bead is formed on a base constituting a bottom of the body to support one side of the cooking object and provides a gap between the cooking object and the base at a position of the water discharge hole.

10. A home appliance comprising:
a casing having a tub provided therein with an interior thereof being opened and closed by a door,
a pump that is installed inside the casing and pressurizes and delivers water,
a spray nozzle that is located inside the tub and sprays water supplied by the pump, and
a food cooking device that is installed in the casing and allows water sprayed by the spray nozzle to pass therethrough by gravity so that heat is transferred to a cooking object.

11. The home appliance of claim 10, wherein the food cooking device comprises a body having an internal space in which the cooking object is located and a water discharge hole formed on a bottom thereof, and a cover that opens and closes the internal space and allows the cooking object to be located in the internal space, with the cover having a water introduction hole through which more hot water passes than an amount of hot water discharged per unit time through the water discharge hole.

12. The home appliance of claim 11, wherein an overflow fence is formed to surround an entrance edge of the internal space of the body to form a space in which hot water entering the internal space through the water introduction hole is held.

13. The home appliance of claim 12, wherein the overflow fence is formed to protrude on an edge of a seating end, which is formed on the entrance edge of the internal space of the body, by having a predetermined height.

14. The home appliance of claim 13, wherein a locking member that fixes the cover to the body is installed on the overflow fence so as to be rotatable at a predetermined angle.

15. The home appliance of claim 11, wherein the cover has recessed parts formed thereon, and has further a handle formed on a center of the cover corresponding to a position between the recessed parts.
